# EUROPEAN PATENT SPECIFICATION

(11) **EP 0 358 860 B1**
(45) Date of publication and mention of the grant of the patent: **13.08.1997**
(21) Application number: 89110978.7
(22) Date of filing: 16.06.1989
(51) Int. Cl.: G06F 17/30

(54) **Apparatus and method for processing data corresponding to labels**
Apparat und Verfahren zur Verarbeitung von Daten eines Kennsatzes
Appareil et méthode pour le traitement de données correspondant aux étiquettes

(30) Priority: 14.07.1988 JP 175411/88; 14.07.1988 JP 175413/88; 14.07.1988 JP 175414/88
(43) Date of publication of application: 21.03.1990
(73) Proprietor: CASIO COMPUTER COMPANY LIMITED, Shinjuku-ku Tokyo 160 (JP)
(72) Inventor: Kashio, Toshio Patent Dpt. Dev. Div., Hamura R & D, Hamura-machi Nishitama-gun Tokyo 190-11 (JP)
(74) Representative: Grünecker, Kinkeldey, Stockmair & Schwanhäusser Anwaltssozietät

(56) References cited:
- EP-A- 0 213 276
- IBM TECHNICAL DISCLOSURE BULLETIN, vol. 31, no. 1, June 1988, pages 158-159, New York, US; "Differential index management with low priority batch updating in database management systems"
- PROCEEDINGS OF THE 1987 FALL JOINT COMPUTER CONFERENCE: 'EXPLORING TECHNOLOGY: TODAY AND TOMORROW', Dallas, Texas, 25th - 29th October 1987, pages 452-460, IEEE, New York, US; N. ROUSSOPOULOS: "Overview of ADMS: A high performance database management system"

## Description

The present invention relates to a data processing apparatus for performing different types of data processings, in accordance with input data or data read out from arbitrary files as well as to a respective data processing method.

Companies often have a variety of lines of business. Moreover, different companies have different lines of businesses even if the industrial sectors of the companies are the same. Further a given company may have a different line of business depending on its office. Accordingly, different types of data must be handled in each office. In order to process and manage such varieties of data at high speed, each company makes use of office automation equipment and a computer for its business applications.

Usually, a specific system design is required for a computer to operate as a company desires. The system design is performed by coding aprogram by a programming language such as a machine language to operate the computer desirably. Thus, in order to operate the computer desirably, a system engineer must analyze the line of business and business requirements, and a programmer must code a program in accordance with the result of such analysis.

Each computer uses a large number of types of business slips, including, for example, order-acceptance slips, sales slips, purchase slips, and transfer slips of traveling-expense statement of accounts, credit slips, and the like. Throughout the following description, such slips, forms, records, etc are reffered to as "slips" for case of description.

Since various tasks must be carried out in a company, the above system design must be performed for every task, i.e., for every processing type. Accordingly, such system design is troublesome and costly.

From EP-A-117 281 a method is known according to which a base text file stored at a host computer is modified from an intelligent terminal through a communication link interconnecting the host and the terminal. The text file is transmitted as a plurality of lines of text from the host to the terminal. At the terminal a hash total is computed for each line in the text file, and the hash totals are stored at the terminal in a separate file. The user next applies changes, including changes to lines, the deletion of lines and the insertion of lines to transform the text file into a modified file. A hash total is computed for each line of text in a modified file, and compared with the hash totals in the hash file to identify changed, deleted, inserted and unchanged lines in the modified file. Changed and inserted lines in the modified file are then communicated to the host, along with control information specifying the number and location within the base text file of selected unchanged and deleted lines. In particular, it is known from this reference to prepare an update record, to store the prepared update record in a storing means, to read-out each of the update records from said storing means in response to an instruction after a plurality of update records have been stored in the storing means and to update the records in the file.

C.J. Date: "An introduction to database systems", 1981, Addison Wesley; pages 107-137 describes data structure and manipulation in a relational database. In particular, this reference mentions, within Chapter 7.4, several update operations selectable when using SGL.

In view of this prior art it is an object of the present invention to provide an apparatus and a method for processing data corresponding to word labels which can eliminate the need to conduct a system design analysis accompanying programming which requires expert knowledge, thereby simplifying the system design corresponding to a user's requirements.

This object is solved by the subject matter of claims 1 and 5. preferred embodiments of the present invention are the subject matter of the dependent claims thereto.

According to the file update technology of EP-A-117 281 and "An introduction to database systems", when a file update process is performed in a batch process based on a plurality of records, the plurality of records are classified and stored in units of files to be updated. Then the files to be updated are designated to perform the file update process.

According to such an update process, it is impossible to store records whose update files are different in a mixed manner. Further, when the file update process is to be performed, an operator must designate a file to be updated by himself or data must be prepared and stored for identifying a file to be updated. This is because each record for updating the files has no data relating to the file name to be updated.

In contrast thereto, according to the present invention, each record for updating the files, namely the "update record", has a file name to be updated. When a file is to be updated by the record, it is neither necessary to designate a file to be updated nor to classify preliminarily the records in units of files to be updated.

According to the present invention, each record can automatically designate a file to be updated by using a file name stored therein and thus it can automatically be determined which file should be updated by the record at the time of the file update process.

Further, according to the technology discussed within EP-A-117 281 and "An introduction to database systems", it is difficult to set and change the definition of a plurality of word labels in an input record and the definition of a plurality of word labels in a file update record. This is because each label is not systematised or managed in units of input records and file update records. As a result, according to the technology of EP-A-117 281 and "An introduction to database systems", the setting of the definition of the entire file update cannot be performed easily.

In contrast thereto, according to the present invention, the definition of a plurality of word labels in an input record and the definition of a plurality of word labels in a file update record are systematically managed by the word label in units of corresponding word labels, thus making the setting and changing for the definition easy.

This invention can be more fully understood from the following detailed description when taken in conjunction with the accompanying drawings, in which:
Figs. 1A and 1B show a block diagram for explaining an embodiment of the present invention;
Fig. 2 is a flowchart indicating a processing performed by unit 12;
Figs. 3A through 3C are views showing a data setting format and data setting examples of table A;
Figs. 4A through 4D are views showing a data setting format and data setting examples of table C;
Fig. 5 is a flowchart showing a processing performed by unit 20;
Fig. 6 is a flowchart showing a processing performed by unit 21;
Fig. 7 is a flowchart showing a processing performed by unit 23;
Figs. 8A through 8C are views showing a word arrangement of a record in each file;
Fig. 9 is a flowchart showing a detail of Fig. 5;
Fig. 10 is a view for explaining a display format;
Fig. 11 is a view showing a record in work memory 26;
Fig. 12 is a flowchart showing a detail of Fig. 6;
Fig. 13 is a view showing a correspondence between a single input record and two update records;
Fig. 14 is a flowchart showing a processing performed by unit 28;
Fig. 15 is a view for explaining a file-update status;
Fig. 16 is a flowchart showing a detail of Fig. 5; and
Fig. 17 is a view for explaining a file-update status of an intermediate record.

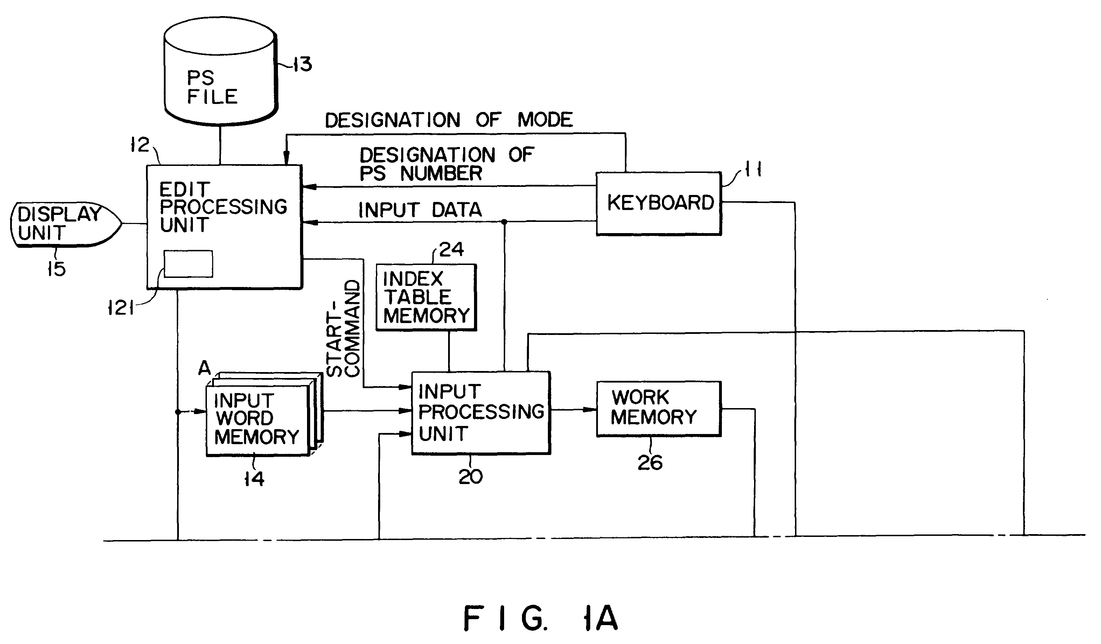

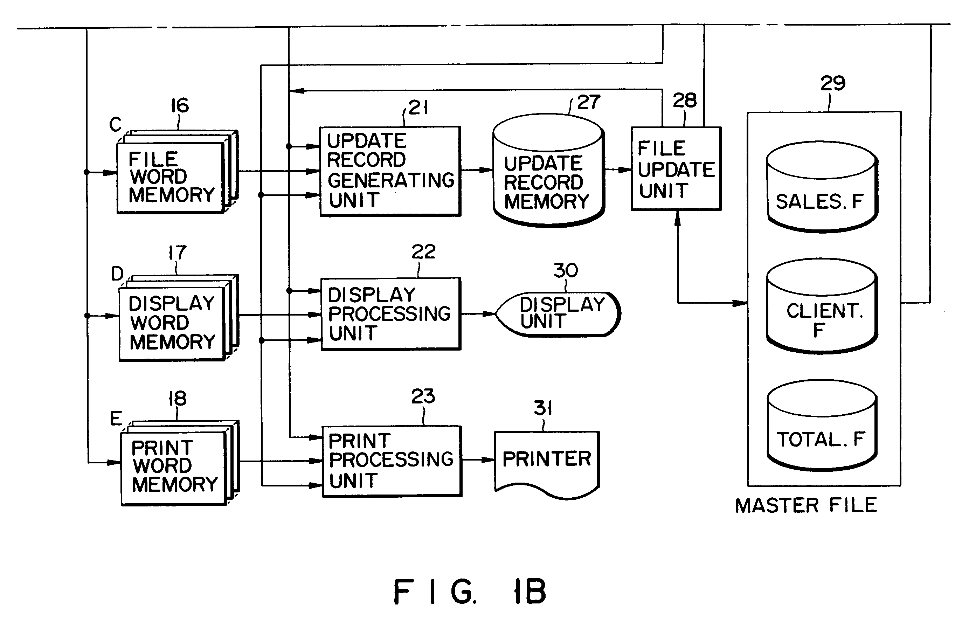

Figs. 1A and 1B show a block diagram of a data processing apparatus according to the present invention. In Figs. 1A and 1B, keyboard 11 is provided with various input keys, designation keys for designating slip processing tasks, totalization processing tasks, and the like, mode designation keys, and the like. Input data and designation data input from keyboard 11 are supplied to edit processing unit 12. Edit processing unit 12 is connected to PS file 13 and display unit 15. PS file 13 preliminarily stores, according to various processing tasks, word labels (hereinafter referred to as table A) for defining input words, word labels (hereinafter referred to as table C) for defining processing functions with respect to update record generating unit 21, definition data (hereinafter referred to as table D) for defining display words and a display format, and word labels (hereinafter referred to as table E) for defining print words and printing format. The displaying format may be the same as the printing format. Tables A through E are generally referred to as a PS. PS file 13 stores the PS according to processing tasks, in correspondence to arbitrary PS numbers.

In response to designations from keyboard 11, edit processing unit 12 sets tables A, C, D and E by each of processing-task read-out tables A, C, D and E corresponding to one of processing task from PS file 13, and loads tables A, C, D and E in input word memory 14, file word memory 16, display word memory 17, and print word memory 18, respectively. Thereafter, unit 12 gives a start command to input processing unit 20. Table A loaded in input word memory 14, table C loaded in file word memory 16, table D loaded in display word memory 17, and table E loaded in print word memory 18 are coupled to input processing unit 20, update record generating unit 21, display processing unit 22, and print processing unit 23, respectively.

Input processing unit 20 is connected to keyboard 11, master file 29, index table memory 24, and work memory 26. Index table memory 24 preliminarily stores current date data, slip number data which are automatically updated in response to an issuance of a slip, and item name data and unit price data both of which correspond to item codes, respectively. Input processing unit 20 performs, in accordance with stored table A, processing operations with respect to data from keyboard 11 or data from master file 29. Unit 20 stores word data obtained by the above operations in work memory 26, and supplies a start command to update record generating unit 21 and print processing unit 23.

Update record generating unit 21 is connected to update record memory 27. Update record generating unit 21 starts a processing operation in response to the start command from input processing unit 20, reads word data from work memory 26, in accordance with file word labels stored in file word memory 16, generates an update record comprised of the word data, and stores it in update record memory 27. The update record includes a file name code of a file to be updated, a file updata type code keyword data and update word data each having a same word arrangment as that of a record in the file.

Update record memory 27 stores a plurality of update records. Each of the update records in memory 27 is supplied to file update unit 28 in response to a command from keyboard 11. File update unit 28 updates files in master file 29, corresponding to the update record.

Display processing unit 22 reads word data from work memory 26 in accordance with display word labels stored in display word memory 17, and displays the word data on display unit 30. Print processing unit 23 starts a printing operation in response to the start command from input processing unit 20, reads word data from work memory 26 in accordance with print word labels stored in print word memory 18, and prints out the word data by driving print unit 31.

The processing performed by edit processing unit 12, input processing unit 20, update record generating unit 21, and print processing unit 23 will now be described with reference to the drawings.

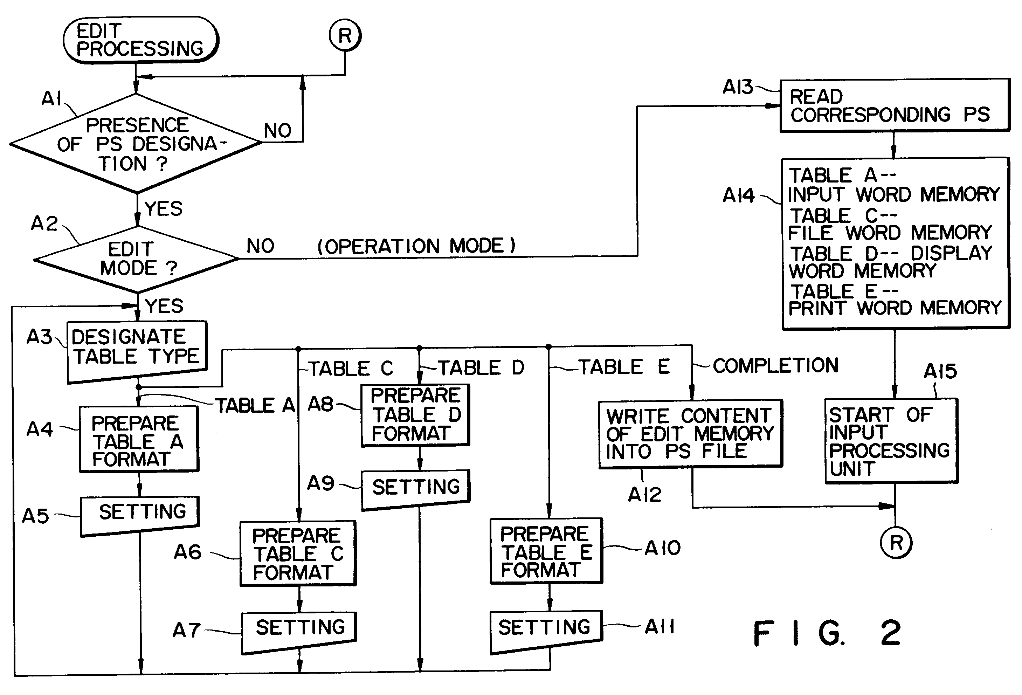

When the PS corresponding to a desired processing task is set in PS file 13, an edit mode is designated through keyboard 11. Thereafter, an arbitrary PS number is designated through keyboard 11. The designation data of edit mode and PS number is supplied from unit 11 to unit 12. Thus, edit processing unit 12 performs an operation shown in a flowchart of Fig. 2.

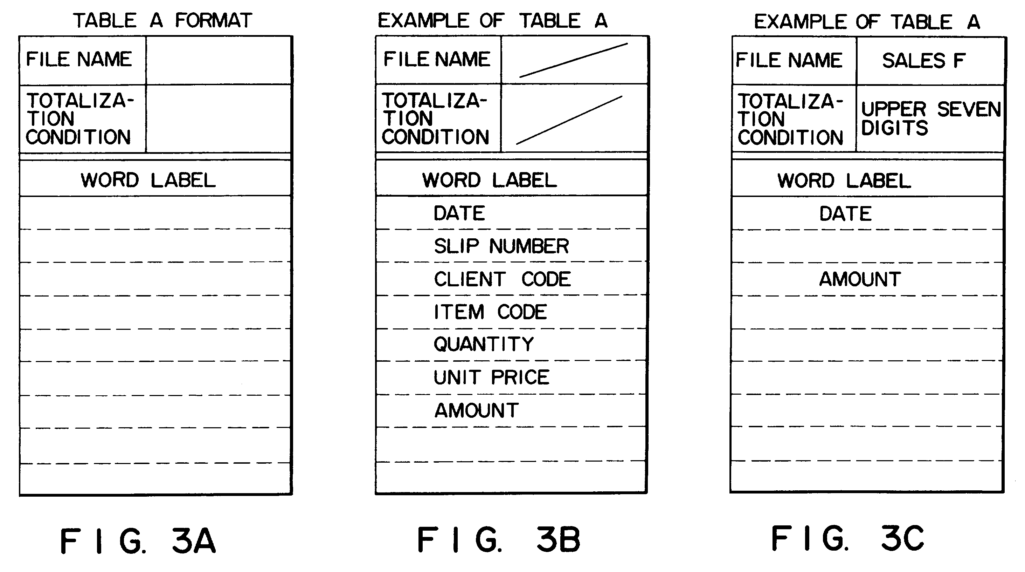

Edit processing unit 12 checks, in step A1, a presence or an absence of the designation of PS number from keyboard 11. If the PS number is designated, unit 12 determines, in step A2, whether the edit mode is designated or not. If the edit mode is designated, unit 12 waits, in step A3, a designation of table types by an operator. In step A3, if the operator designates a type of table A, unit 12 displays, in step A4, table A format shown in Fig. 3A on the display screen of the display unit 15, and in step A5, unit 12 waits an input operation from the operator, in accordance with table A format, data of a file name, totalization condition, and word labels. Each of the input data are stored in edit memory 121. Figs. 3B and 3C specified examples of table A. In an example shown in Fig. 3B, the file name and the totalization condition are not input, but "date", "slip number", "client code", "item code", "quantity", "unit price", and "amount" are input as the word label. This table A is used for slip processing tasks. In an example shown in Fig. 3C, "sales file" is input as the file name, "upper seven digits of keyword" is input as the totalization condition, and "date", "amount" are input as the word label. Table A shown in Fig. 3C is used for the totalization processing tasks.

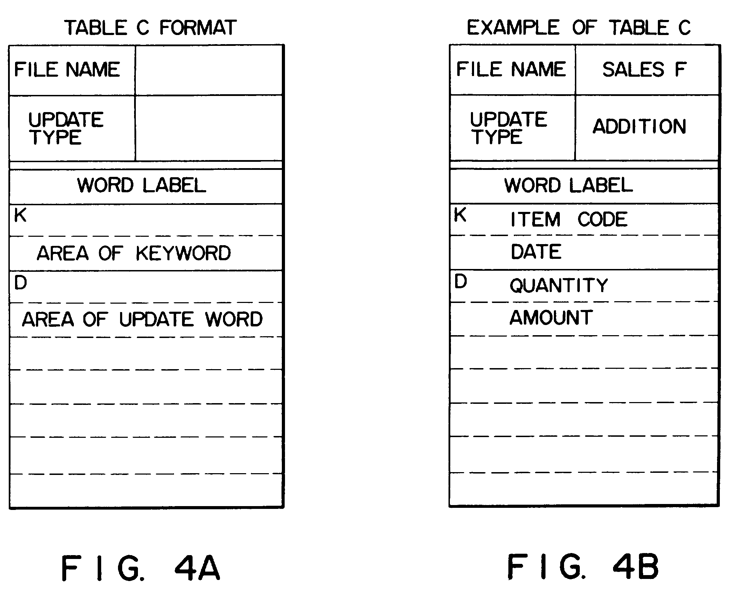

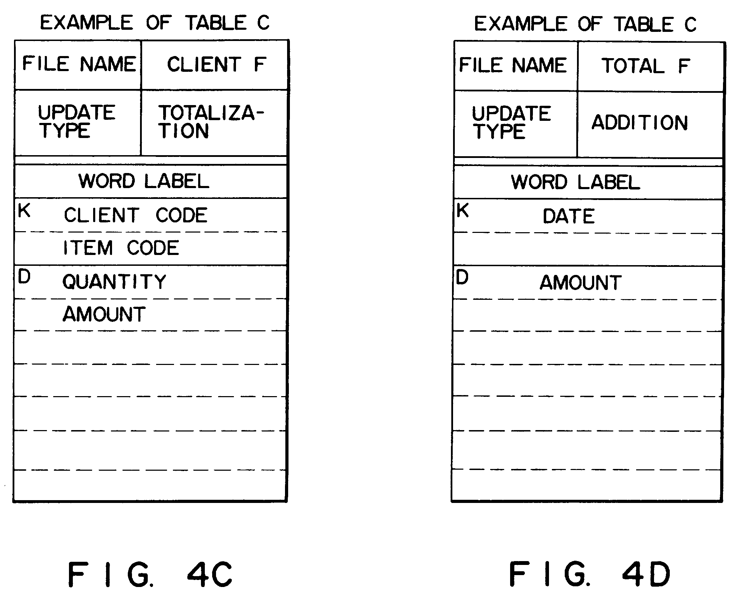

When a type of table C is designated in step A3, unit 12 displays, in step A6, table C format shown in Fig. 4A, and in step A7, inputs the file name code, the file, update type code, keyword labels (K) and update word labels (D), in accordance with the table C format, and each of the input data are stored in edit memory 121. Fig. 4B shows an example of table C. As shown in Fig. 4B, "sales file" is set as the file name code, and "addition" is set as the file update type code. Furthermore, "item code" and "date" are set as the keyword labels, and "quantity" and "amount" are set as the update word labels. Figs. 4C and 4D show other examples.

Further, when a type of table D or table E are designated in step A3, similar operation as described above are performed in steps A8 and A9 or A10 and A11. The table D or table E set data in accordance with the table D format or table E format are stored in edit memory 121.

When setting of tables A through E is completed and an operator depresses a completion key, edit processing unit 12 loads, in step A12, each of the tables stored in edit memory 121 in PS file 13 as the PS corresponding to the designated PS number. Thereafter, unit 12 returns to step A1.

When a desired PS number is designated on the operation mode, unit 12 reads, in step A13, the PS corresponding to the designated PS number from PS file 13, and loads, in step A14, the tables A through E in input word memory 14, file word memory 16, display word memory 17, and print word memory 18. Thereafter, unit 12 gives, in step A15, a start command to input processing unit 20.

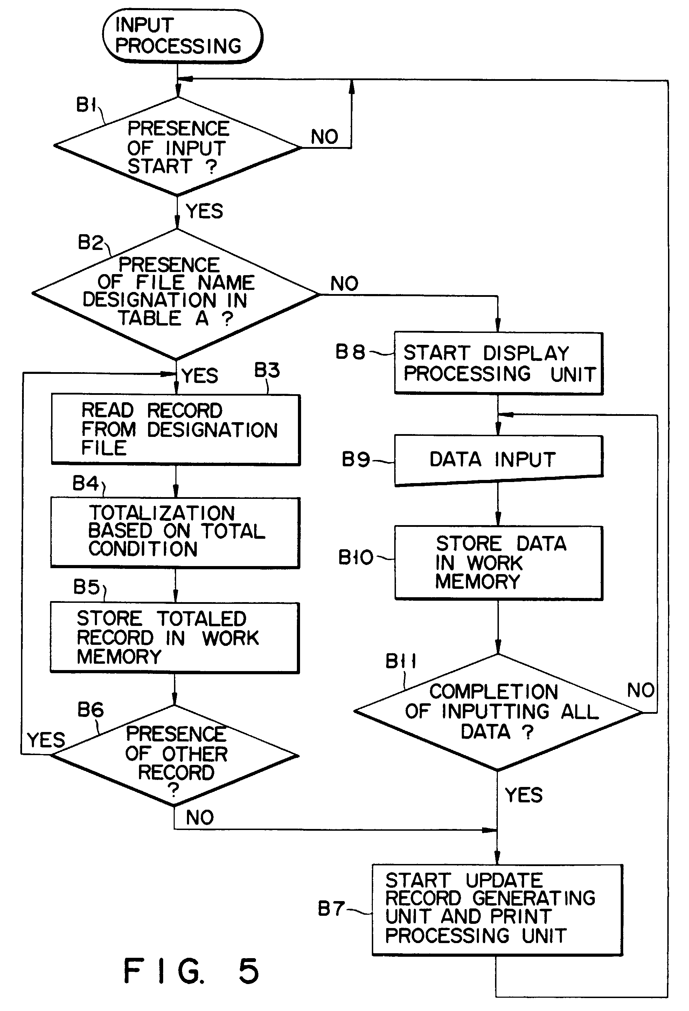

Thus, input processing unit 20 starts, and performs a processing according to a flowchart shown in Fig. 5. In step B1, unit 20 checks for the presence or absence of a start command from edit processing unit 12. If the presence of the start command is determined, unit 20 advances to step B2 to determine whether the file name is set in input word memory 14. If the file name code is set as shown in Fig. 3C, unit 20 reads a record from a specified file corresponding to the file name code, and performs an input processing with respect to the record. More specifically, unit 20 reads, in step B3, one record from the specified file of master file 29, and performs, in step B4, a totalization processing with respect to the record in accordance with the totalization condition. Further, unit 20 stores, in step B5, the totaled record in work memory 26.

Steps B3 through B5 are repeated until it is determined in step B6 that no other records remain in the specified file. Thus, in steps B3 through B6, unit 20 totals each record in the specified file in accordance with the totalization condition, and stores the totaled result in work memory 26. If NO is determined in step B6, unit 20 supplies the start command to update record generating unit 21 and print processing unit 23 in step B7, and returns to step B1.

If no file name code is set as shown in Fig. 3B, unit 20 supplies, in step B8, the start command to display processing unit 22. Upon receiving the start command from input processing unit 20, display processing unit 22 displays a display format and a cursor on a screen of display unit 30 to urge an operator to input data. An operator inputs, in step B9, word data from keyboard 11 in accordance with the input designation on the screen. Input processing unit 20 stores in step B10 word data input from keyboard 11 in work memory 26. Thereafter, unit 20 determines, in step B11, whether data input with respect to one record is completed or not. If the data input is not completed, unit 20 returns to step B9 to repeat similar processings.

If the data input is completed, unit 20 advances to step B7.

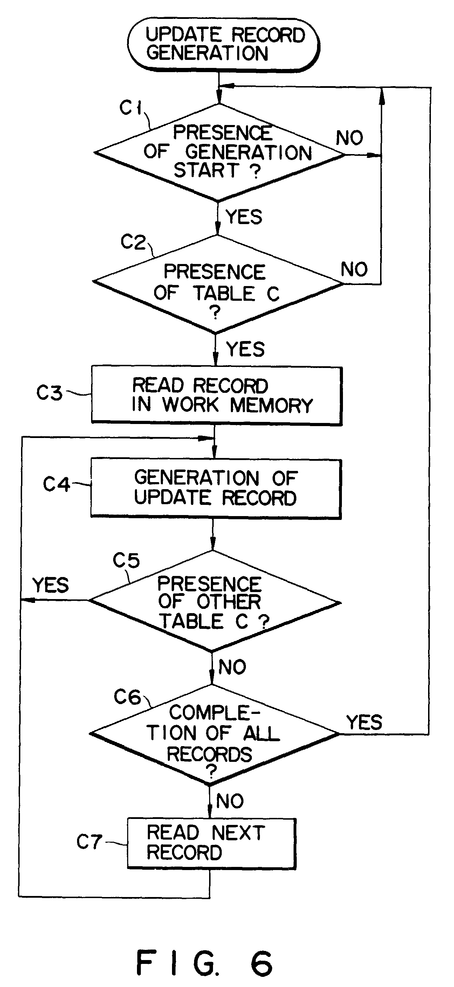

Update record generating unit 21 performs a processing as shown in a flowchart in Fig. 6.

Upon receiving a start command from input processing unit 20, update record generating unit 21 checks, in step C2, whether table C is loaded in file word memory 16. If no table C is loaded, unit 21 returns to step C1. On the contrary, if table C is found in file word memory 16, unit 21 reads, in step C3 a record stored in work memory 26, and generates, in step C4, an update record. Upon completion of generating the update record, unit 21.determines, in step C5, whether another table C is loaded in file word memory 16. If another table C is loaded in memory 16, unit 21 returns to step C4 to generate another update record. If no other table C is found in step C5, unit 21 determines in step C6 whether all the records in work memory 26 are read out. If the determination is affirmative, processing of unit 21 ends.

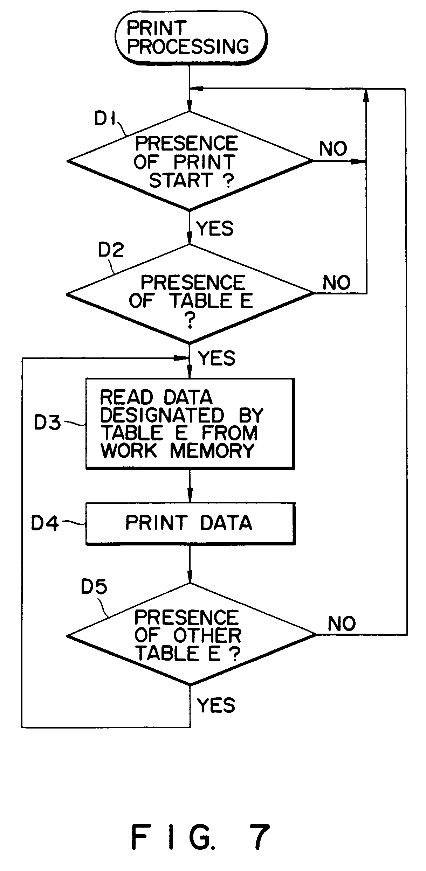

Further, print processing unit 23 performs a print processing as shown in the flowchart of Fig. 7.

Print processing unit 23 checks, in step D1, the presence or absence of the start command from input processing unit 20. If the presence of the start command is determined, unit 23 advances to step D2 to check whether table E is loaded in print word memory 18. If table E is not loaded in memory 18, unit 23 returns to step D1.

On the contrary, if table E is loaded in memory 18, unit 23 reads from work memory 26, in step D3, word data corresponding to word labels set in table E, and prints, in step D4, the word data. Thereafter, in step D5, unit 23 determines whether another table E is loaded in print word memory 18. If another table E is found, unit 23 returns to step D3.

Similar operations are repeated and thus word data corresponding to the word labels defined by table E are printed. If no other table E is found, processing of unit 23 ends.

A specific example wherein data processing unit performs a slip processing task will now be described.

Note that the slip processing task is to input data by an operator in accordance with a preliminarily determined slip format, to issue a desired slip, and to update a predetermined file in master file 29 in accordance with the data input. As an example of the slip processing task, a sale slip transaction will now be described.

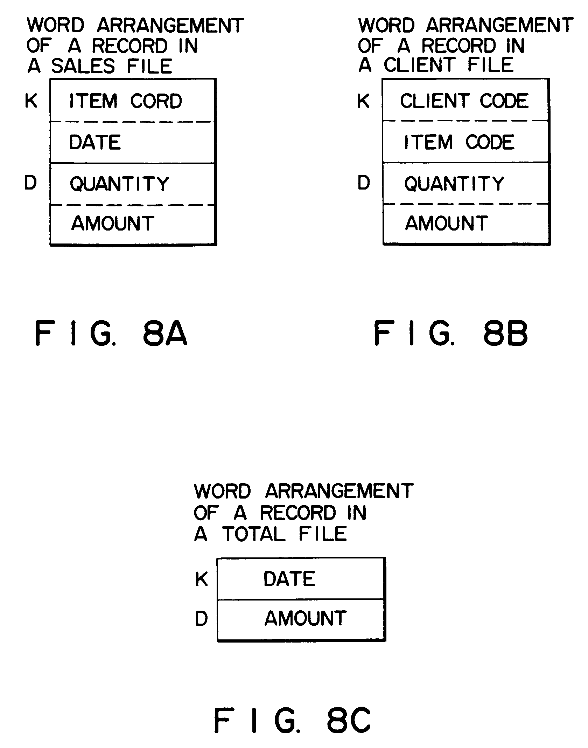

First, the data processing apparatus according to the present invention must be set to enable a transaction corresponding to a sales slip. More specifically, the PS indicating a sales slip processing task must be set. Further, tables A through E must be set to transact the sales slip. In this example, table A in Fig. 3B, tables C in Figs. 4B and 4C, and tables D and E for defining the output format of the sales slip are required. The reason for the necessity of two tables C is that two files, i.e., a sales file and a client file must be updated with respect to a sales slip transaction. Two tables C shown in Figs. 4B and 4C are set in accordance with word arrangements of a record in each file shown in Figs. 8A and 8B. Tables C are set in accordance with the flowchart shown in Fig. 2. More specifically, tables C are set corresponding to PS number 1, for example.

An operator sets tables A through E by keyboard 11, releases the edit mode, and designates the PS number 1. Then, edit processing unit 12 reads tables A through E corresponding to the designated PS number 1 from PS file 13, loads tables A, C, D, and E in input word memory 14, file word memory 16, display word memory 17, and print word memory 18, respectively, and after the loading, supplies a start command to input processing unit 20. Then, input processing unit 20 starts to receive data from keyboard 11.

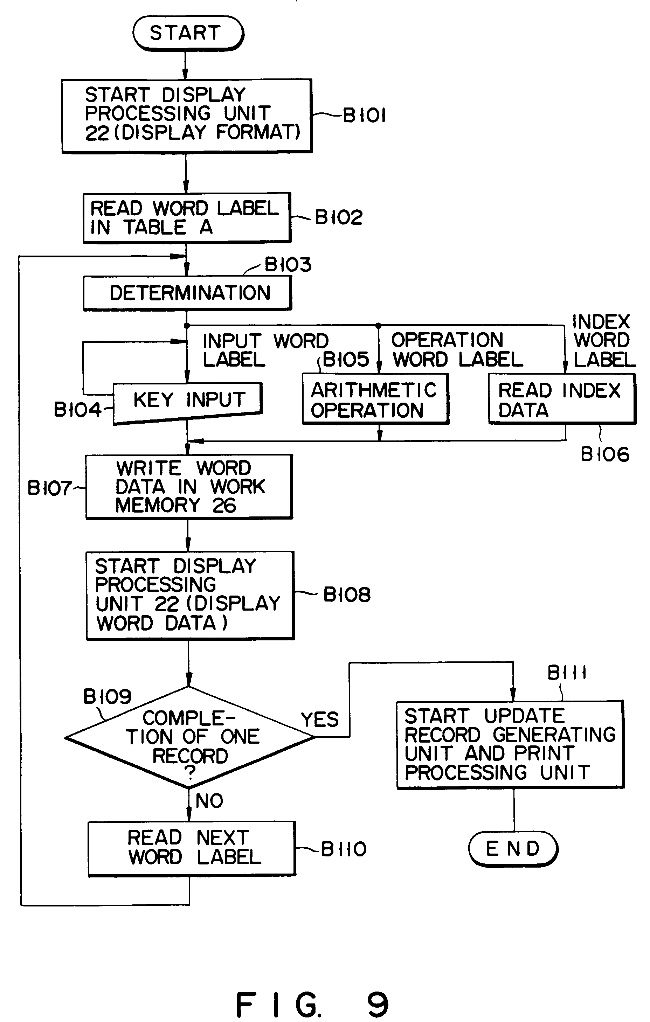

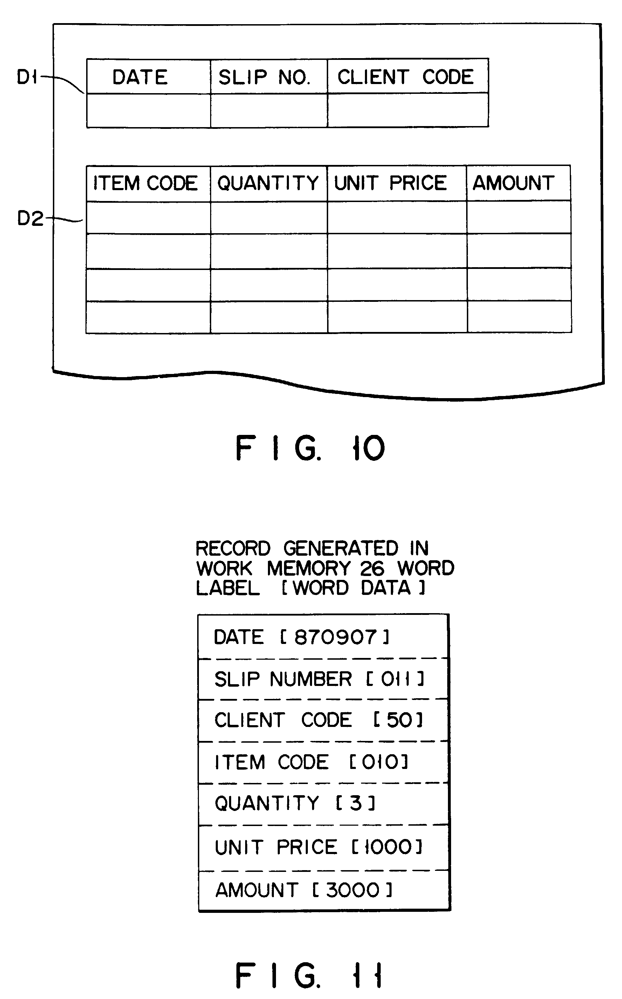

The data input for a single slip is performed as shown in a flowchart of Fig. 9 by a control of input processing unit 20. The flowchart shown in Fig. 9 shows in detail processings of steps B8 through B11 and B7 in Fig. 5. Input processing unit 20 starts, in step B101, display processing unit 22 to generate a slip format shown in Fig. 10 in accordance with table D in display word memory 17, and to display the generated slip format on display unit 30. Input processing unit 20 reads in step B102 the word label of table A stored in input word memory 14, and determines in step B103 whether the word label is set as an input word label, an operation word label or an index word label. If the word label is set as the input word label, the operation word label, and the index word label, unit 20 advances to a key-input processing by keyboard 11 in step B104, an operation processing in step B105, and an index data reading processing in step B106, respectively. The first word label of above described table A represents "date", and is set as the index word label. Therefore, unit 20 advances to step B106 to retrieve index table memory 24, reads the preliminarily set current date data, for example "870907", stores, in step B107, it in work memory 26 as the word data corresponding to the word label of "date", and starts, in step B108 display processing unit 22. Display processing unit 22 reads from work memory 26 the word data designated by the word label of table D in display word memory 17, outputs the read-out word data to display unit 30, and displays it in the "date" column of the screen. Then, input processing unit 20 determines, in step B109, whether all the processings are completed or not by the depression of a completion key for completing an input of a single record. If the completion key is not depressed, unit 20 reads, in step B110, "slip number" of the next word label from input word memory 14 and returns to step B103 to discriminate the word label. Since the "slip number" is also set as the index word label, unit 20 executes the index data reading processing. More specifically, unit 20 reads the slip number data, e.g., "011" from index table memory 24, stores it in work memory 26 as the word data corresponding to the word label of the "slip number", and then displays it in the "slip number" column on display unit 30 through display processing unit 22. Thereafter, unit 20 reads "client code" of the next word label from input word memory 14, and analyzes the word label. Since the "client word" is set as the input word label, unit 20 advances to the key input processing in step B104. In this key input processing, unit 20 displays a cursor on item corresponding to the word label, in the display format displayed by display unit 30. More specifically, unit 20 urges an operator to input a word data of "client code". When an operator inputs "50", for example as the client code, unit 20 stores the word data "50" as the word data corresponding to the word label of the "client code" in work memory 26 and displays it in a column of "a client code" on display unit 30.

Similar key input processings are performed with respect to "item code", "quantity", "unit price", and the like read out from input word memory 14. When the word label of "amount" is read out from input word memory 14, an arithmetic operation in step B105 is executed. In this operation, an arithmetic operation of "quantity x unit price" is executed based on the word data corresponding to the word label of "quantity" and the word data corresponding to the word label of "unit price". The operation result is stored in work memory 26 as the word data corresponding to the word label "amount", and also displayed in a column of "amount" on display unit 30.

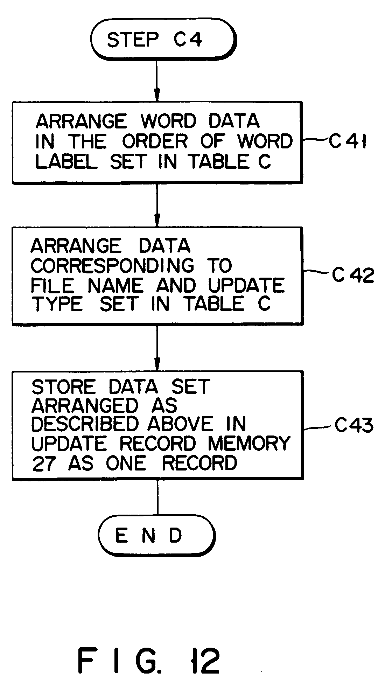

Fig. 11 shows a content of work memory 26 after data amount to one record are input. Work memory 26 stores a plurality of pairs each comprising a word label and a word data corresponding to the word label. After a word processing with respect to one record is completed as described above, unit 20 advances from step B109 to step B111 to start update record generating unit 21 as well as print processing unit 23.

In response to a start command from input processing unit 20, update record generating unit 21 executes a processing in accordance with a flowchart shown in Fig. 6. In step C2, unit 21 determines whether table C is set in file word memory 16 or not. In this case, table C shown in Fig. 4B is set in memory 16. Therefore, unit 21 advances to step C3 to read a record stored in work memory 26, and generates in step C4 an update record in accordance with table C shown in Fig. 4B. The details of step C4 are shown in Fig. 12. More specifically, unit 21 extracts in step C41 the word data corresponding to "item code", "date", "quantity", and "amount" from the words constituting a record read out from work memory 26, and arranges the word data in the order of the word labels set in table C. Then, unit 21 arranges in step C42 "file name code" and "file update type code" set in table C. Unit 21 stores, in step C43, the data thus arranged in update record memory 27, as one update record.

After generating the update record in step C4, unit 21 determines, in step C5, if other table C is stored in file word memory 16. In this case, memory 16 stores table C shown in Fig. 4C besides table C shown in Fig. 4B. Therefore, unit 21 returns to step C4 to generate another update record in accordance with table C shown in Fig. 4C and stores it in update record memory 27.

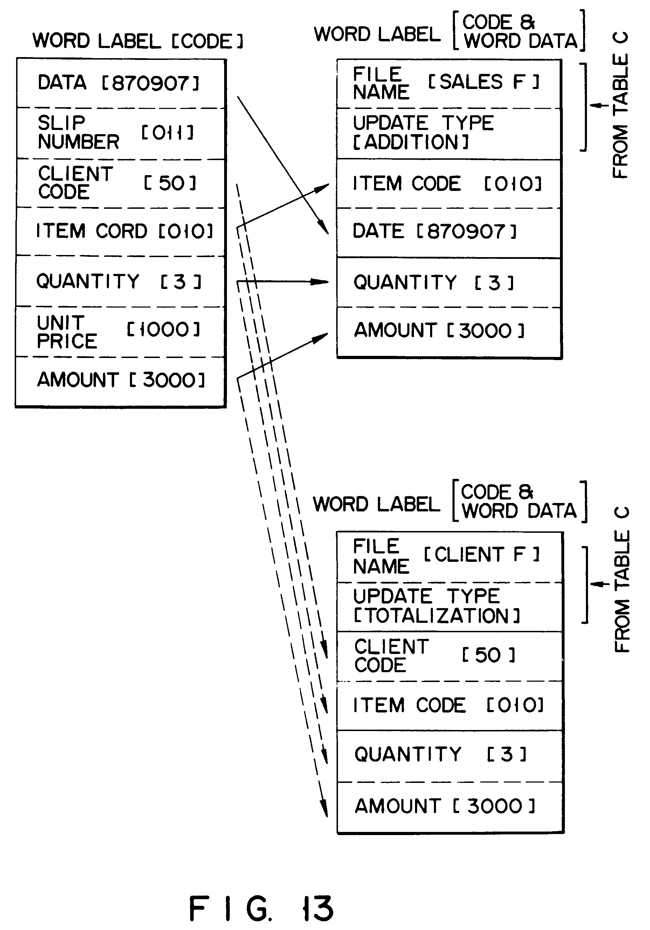

Fig. 13 is a diagram explaining how to generate two update records in accordance with two tables C shown in Figs. 4B and 4C. More specifically, Fig. 13 shows a correspondence between the respective words constituting an update record and the respective words constituting a record stored in work memory 26.

After completing all the tables C stored in file word memory 16, unit 21 advances from step C5 to step C6 to determine whether or not all the records store in work memory 26 are processed. In this case, since work memory 26 stores a single record, YES is determined and unit 21 thus completes the update record generating processing. If unit 21 determines other records stored in work memory 26 in step C5, it reads in step C7 the other record and repeats processings shown in steps C4 and C5 with respect to the read-out record.

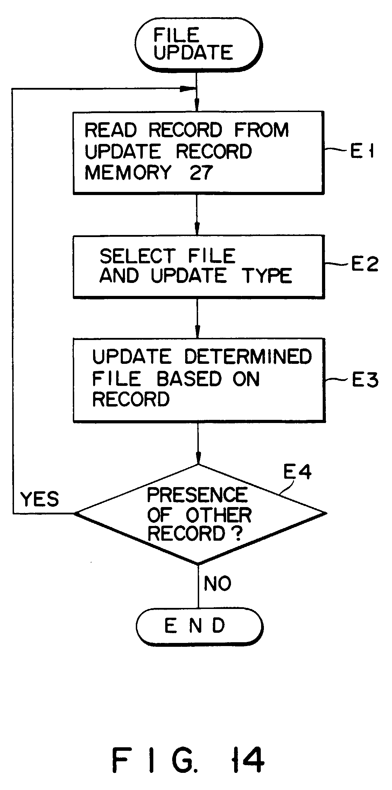

As described above, records to be stored in work memory 26 are transformed into update records through update record generating unit 21, and then sequentially stored in update record memory 27. The update records stored in update record memory 27 are sequentially read in file update unit 28 in accordance with an update command from keyboard 11. Then, update unit 28 updates files stored in master file 29. More specifically, file update unit 28 performs a processing according to a flowchart shown in Fig. 14 in response to an update command, reads in step E1 an update record stored in update record memory 27, and selects in step E2 a corresponding file in master file 26 and the update type, in accordance with the "file name code" and "file update type code" included in the update record. Further, unit 28 updates, in step E3, a selected file based on the selected update type by using a record constituted by keywords S(K) and update words (D) included in the update record. The processings in steps E1 through E4 are applied to each update record stored in update record memory 27.

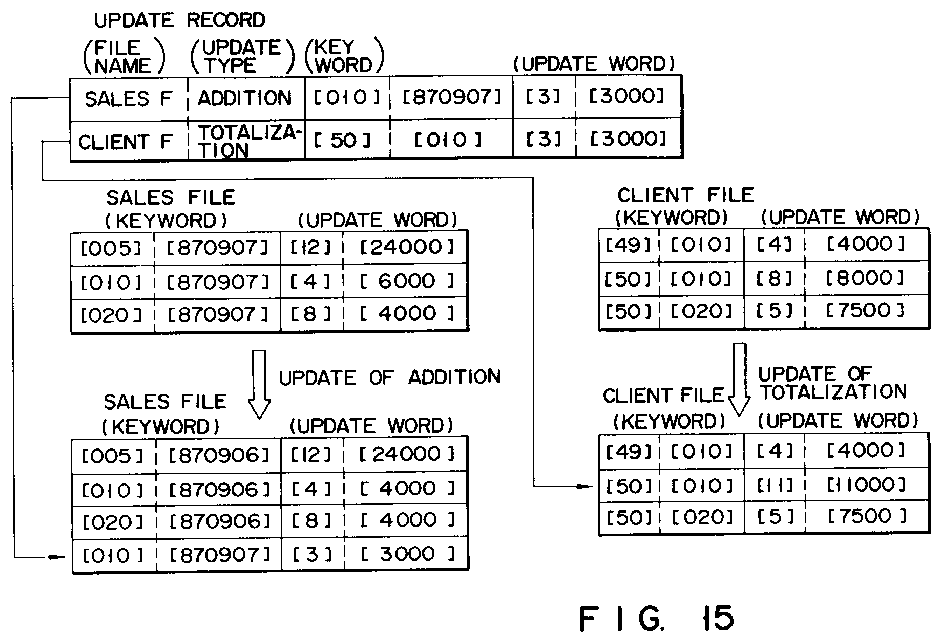

Fig. 15 is a transition diagram wherein the files designated by the update records, i.e., the sales file and the client file are updated in accordance with the two update records stored in update record memory 27.

A specific example of a totalization processing task performed by a data processing apparatus according to the present invention will now be described. Note that the totalization processing task is to update other total file in accordance with each record in a file such as the sales file which is updated by a daily slip transaction task.

A sales totalization transaction will now be described as an example of a totalization transaction.

First, the data processing apparatus according to the present invention must be set to enable a sales totalization. More specifically, the PS indicating the sales totalization processing task must be set, and the corresponding tables A and C must be set. In this example, table A shown in Fig. 3C and table C shown in Fig. 4D are required. Table C shown in Fig. 4D is set in accordance with a word arrangement of a record in the total file. Fig. 8C shows a word arrangement of a record in the total file. Tables A and C are set in accordance with the flowchart shown in Fig. 2, and are set corresponding to PS number 2, for example.

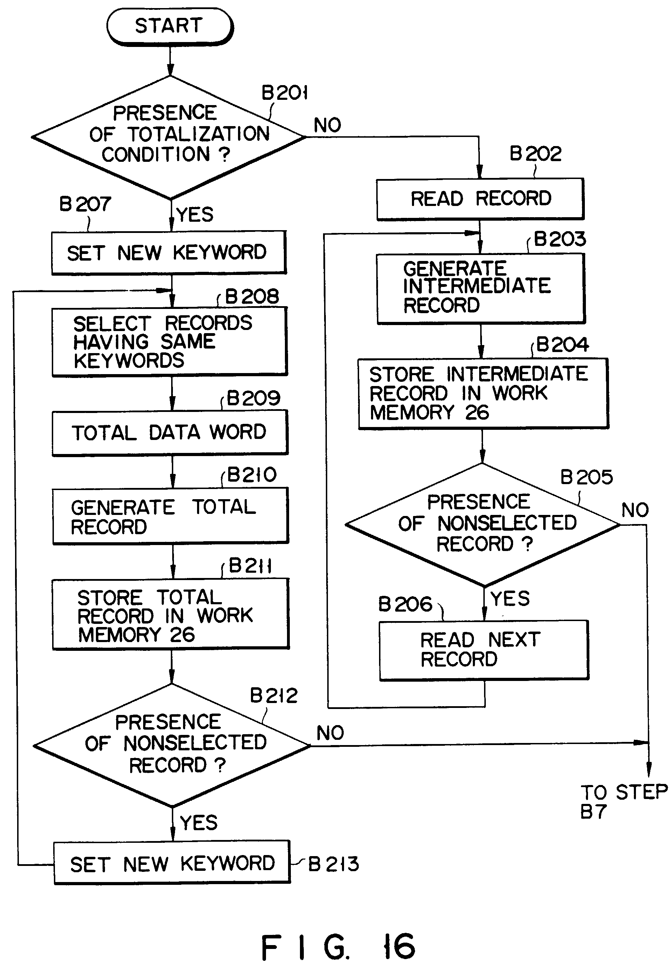

An operator sets tables A and C to the PS file 13 by keyboard 11, releases the edit mode, and designates the PS number 2. Then, edit processing unit 12 reads tables A and C corresponding to PS number 2 from PS file 13, in accordance with the designated PS number, loads tables A and C in input word memory 14 and file word memory 16, respectively, and supplies a start command to input processing unit 20. In response to the start command, input processing unit 20 starts a processing in accordance with table A stored in input word memory 14. Fig. 16 shows in detail steps B3 through B6 in Fig. 5. Input processing unit 20 determines, in step B201, whether the totalization condition is set in table A. If the totalization condition is not set, unit 20 advances to step B202 to read a record stored in a file corresponding to a file name code, e.g. "sales file", set in table A. Unit 20 reads from the record, in step B203, word data corresponding to word labels set in table A, and generates an intermediate record in which the word data are arranged in the order of the word labels set in table A. Then, unit 20 stores, in step B204, the intermediate record in work memory 26. In step B205, unit 20 determines whether all the records have been read out from the "sales file". If a record which has not been read out remains in the file, unit 20 reads, in step B206, the record from the file, and returns to step B203 to generate the intermediate record. Processings in steps B203 through B206 are repeated until all the records have been read out from the file. When unit 20 completes the reading operation of all the records from the file, it advances to step B7 in Fig. 5.

In the embodiment of the present invention, a totalization condition is set in table A stored in input word memory 14, as shown in Fig. 3C. Therefore, unit 20 advances from step B201 to B207. As the totalization condition, the upper seven digits of keywords are set in table A. Therefore, unit 20 extracts, in step B207, the upper seven digits of the keywords of the record stored in the file corresponding to a file name set in table A, i.e., "sales file", and sets the seven digits as a new keyboard data. In step B208, unit 20 selects, from the file, all records whose upper seven digits of the keywords coincide with those of the new keyword data, and totals, in step B209, the update word data of each of the selected records. Unit 20 generates, in step B210, a totaled record which has the new keyword data and the totaled update word data. Thus, unit 20 stores the totaled record in work memory 26 in step B211. In step B212, unit 20 determines whether any record which has not been selected yet remains in the file. If the non-selected record remains in the file, unit 20 extracts, in step B213, the upper seven digits of the keywords of the record and sets the upper seven digits as a new keyboard data. Then, unit 20 repeats steps B208 through B211 to generate the totaled record in which the respective words in each selected record having the same upper seven digits are totaled, and stores it in work memory 26. Then, unit 20 totals the records by the keyword serving as the totalization condition set in table A, in accordance with a similar operation. When unit 20 completes all the record totalization based on all the totalization conditions, unit 20 advances to step B7 in Fig. 5.

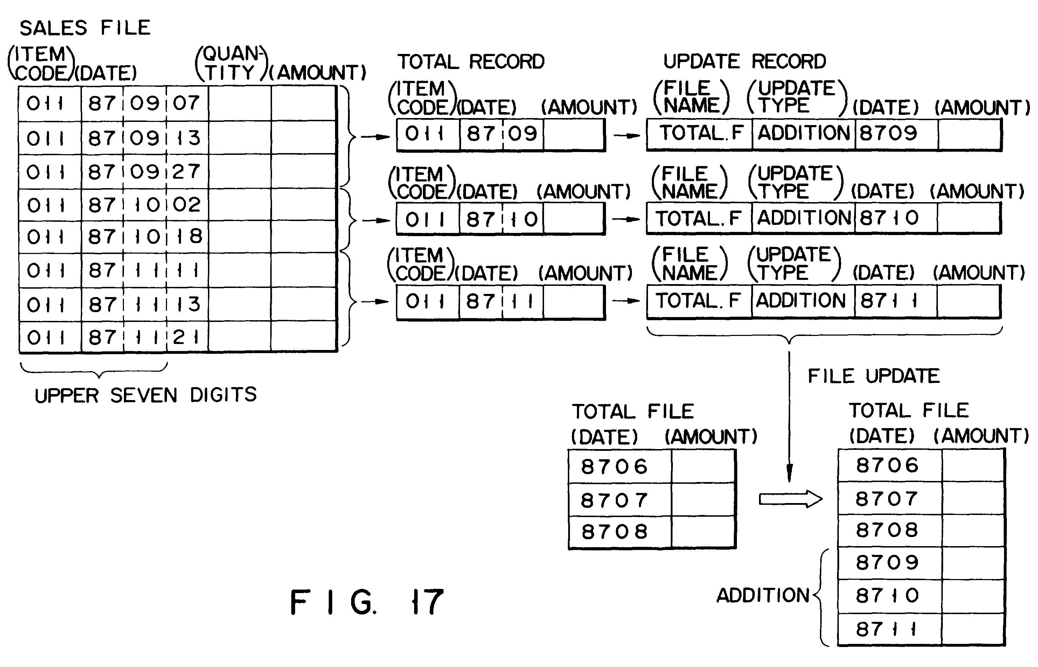

Fig. 17 shows a transition diagram in which records stored in the sales file and having the same upper seven digits of the keyword are totaled and stored in work memory 26 by the operation of input processing unit 20 as described above. In response to a start command supplied from input processing unit 20, update record generating unit 21 operates in accordance with table C as shown in the flowchart shown of Fig. 6. More specifically, table C shown in Fig. 4D is stored in file word memory 16. Therefore, each record stored in work memory 26 is transformed into respective update records and then stored in update record memory 27.

As described above, a plurality of update records are stored in update record memory 27. In response to a file update command from keyboard 11, these update records are sequentially read in the file update unit 28 in accordance with the flowchart in Fig. 14. Thus, a file corresponding to the file name code stored in update record memory (in this case, the total file) is updated.

## Claims

1. A data processing apparatus comprising a plurality of files, input processing means for generating input records, first data storing means for storing the input records generated by the input processing means, generating means for generating an update record, second data storing means for storing the generated updated records, and file update means for reading out, in response to a file update instruction, one of the update records stored in the second data storing means, for updating, and for performing the read out and the update operations for every update record in said second data storing means, said data processing apparatus comprising:
input word storing means (14) for storing an input word table including a first file name corresponding to one of the files and a first set of word labels;
file word storing means (16) for storing a file word table including a second file name corresponding to one of the files, and a second set of word labels;
said input processing means (20) comprising means for designating the file corresponding to the first file name included in the input word table, for reading out a record stored in the designated file, for reading out a plurality of word data assigned to the first set of labels from a predetermined word data included in the read out record, for generating input records, each input record including the plurality of word data assigned to the first set of labels, and for performing the read out and the generation operations of every record stored in the designated file;
said generating means (21) comprising means for designating one of the input records stored in the first data storing means, for reading out from the input record a plurality of word data assigned to the second set of word labels, for generating an update record including the read out respective word data and the second file name set in the file word table, and for performing the read out and the generation operations for every input record stored in the first data storing means;
said file update means (28) comprising means for updating, in accordance with the respective word data included in the update record, the file assigned to the second file name included in the update record, and for performing the read out and the update operations for every update record stored in the second data storing means.

2. The apparatus according to claim 1, further comprising:
first setting means (12) for arbitrarily setting, in said input word storing means and by an operator, the file word table including the arbitrary second set of word labels and an arbitrary second file name; and
second setting means (12) for arbitrarily setting, in said file word storing means and by an operator, the file word table including an arbitrary second set of word labels and an arbitrary second file name.

3. The apparatus according to claim 1, wherein:
said file word storing means (16) stores a plurality of sets of file word tables; and
said generating means (21) includes means for generating a plurality of update records corresponding to the respective file word tables stored in said file word storing means, from one of the input records stored in said first data storing means.

4. The apparatus according to claim 1, further comprising:
print word storing means (18) for storing a plurality of types of print word tables, each table including a third set of word tables, each table including a third set of word labels and output format; and
print processing means (23) for reading out a plurality of word data assigned to the third set of word labels included in one of the print word tables stored in said print word storing means for every input record stored in said first data storing means, for printing the read out respective word data in accordance with the output format set in the word print table, and for performing the read out and the print operations for every print word table stored in said print word storing means.

5. A method for data processing in a computer comprising input processing means, first data storing means, second data storing means and file update means
the method comprising the steps of:
designating an input word table including a first set of word labels, a file word table including a file name and a second set of word labels, and a print word table including a third set of word tables and print output format;
inputting, in response to an input start instruction, a plurality of word data assigned to the first set of word labels, and generating input records, each input record including the plurality of input word data;
storing the generated input records in a first data storing means;
designating, in response to a file-process start instruction, the input record stored in said first data storing means, reading out from the designated input record a plurality of word data assigned to the second set of word labels, generating an update record including the plurality of read out word data and the file name included in the file word table, and performing the read out and the generation operations for every input record stored in said first data storing means;
storing the generated respective update records in a second data storing means;
reading out, in response to a file update start instruction, the update record stored in the second data storing means, updating a file corresponding to the file name included in the update record in accordance with the respective word data included in the update record, and performing the read out and the update operations for every update record stored in said second storing means; and
reading out, in response to a print output instruction, a plurality of word data assigned to the respective third set of word labels for every input record stored in said first data storing means and printing the read out respective word data in accordance with the print output format included in the print word table.

## Patentansprüche

1. Eine Datenverarbeitungsvorrichtung, die umfaßt, eine Mehrzahl von Dateien, eine Eingabeverarbeitungseinrichtung zum Erzeugen von Eingabesätzen, eine erste Datenspeichereinrichtung zum Speichern der Eingabesätze, die von der Eingabeverarbeitungseinrichtung erzeugt worden sind, eine Erzeugungseinrichtung zum Erzeugen eines Aktualisierungssatzes, eine zweite Datenspeichereinrichtung zum Speichern der erzeugten, aktualisierten Sätze und eine Dateiaktualisierungseinrichtung zum Auslesen von einem der Aktualisierungssätze in Reaktion auf einen Dateiaktualisierungsbefehl, die in der zweiten Datenspeichereinrichtung gespeichert sind, um zu aktualisieren, und um das Auslesen und die Aktualisierungsoperationen für jeden Aktualisierungssatz in der genannten zweiten Datenspeichereinrichtung auszuführen, wobei die genannte Datenverarbeitungsvorrichtung umfaßt:
eine Eingabewortspeichereinrichtung (14) zum Speichern einer Eingabeworttabelle, die einen ersten Dateinamen, der einer der Dateien entspricht, und eine erste Gruppe von Wortetiketten einschließt ;
eine Dateiwortspeichereinrichtung (16) zum Speichern einer Dateiworttabelle, die einen zweiten Dateinamen, der einer der Dateien entspricht, und eine zweite Gruppe von Wortetiketten einschließt ;
die genannte Eingabeverarbeitungseinrichtung (20) umfaßt eine Einrichtung zum Bezeichnen der Datei entsprechend dem ersten Dateinamen, der in der Eingabeworttabelle enthalten ist, um einen in der bezeichneten Datei gespeicherten Satz auszulesen, um eine Mehrzahl von Wortdaten, die der ersten Gruppe von Etiketten zugeordnet sind, aus einer vorbestimmten Wortdate auszulesen, die in der ausgelesenen Satz enthalten ist, um Eingabesätzen zu erzeugen, wobei jede Eingabesatz die Mehrzahl von Wortdaten, die der ersten Gruppe von Etiketten zugeordnet sind, einschließt und um das Auslesen und die Erzeugungsoperationen von jedem in der bezeichneten Datei gespeicherten Satz auszuführen;
die genannte Erzeugungseinrichtung (21) umfaßt eine Einrichtung zum Bezeichnen von einem der Eingabesätze, die in der ersten Datenspeichereinrichtung gespeichert sind, zum Auslesen einer Mehrzahl von Wortdaten, die der zweiten Gruppe von Wortetiketten zugeordnet sind, aus der Eingabesatz, zum Erzeugen eines Aktualisierungssatzes, der die ausgelesenen, entsprechenden Wortdaten und den zweiten Dateinamen der in der Dateiworttabelle eingestellt ist, und zum Ausführen des Auslesens und der Erzeugungsoperationen für jeden Eingabesatz, der in der ersten Dateispeichereinrichung gespeichert ist;
die genannnte Dateiaktualisierungseinrichtung (28) umfaßt eine Einrichtung zum Aktualisieren gemäß den entsprechenden Wortdaten, die in dem Aktualisierungssatz eingeschlossen sind, der Datei, die dem zweiten Dateinamen zugeordnet ist, der in dem Aktualisierungssatz enthalten ist, und zum Ausführen des Auslesens und der Aktualisierungsoperationen für jeden Aktualisierungssatz, der in der zweiten Datenspeichereinrichtung gespeichert ist.

2. Die Vorrichtung gemäß Anspruch 1, des weiteren umfassend:
eine erste Einstelleinrichtung (12), um beliebig in der genannten Eingabewortspeichereinrichtung und durch eine Bedienungsperson die Dateiworttabelle einzustellen, die die beliebige zweite Gruppe von Wortetiketten und einen beliebigen zweiten Dateinamen einschließt; und
eine zweite Einstelleinrichtung (12), um beliebig in der genannten Dateiwortspeichereinrichtung und durch eine Bedienungsperson die Dateiworttabelle einzustellen, die eine beliebige zweite Gruppe von Wortetiketten und einen beliebigen zweiten Dateinamen einschließt.

3. Die Vorrichtung gemäß Anspruch 1, worin:
die genannte Dateiwortspeichereinrichtung (16) eine Mehrzahl von Gruppen von Dateiworttabellen speichert; und
die genannte Erzeugungseinrichtung (21) eine Einrichtung zum Erzeugen einer Mehrzahl von Aktualisierungssätzen, die den entsprechenden Dateiworttabellen entsprechen, die in der genannten Dateiwortspeichereinrichtung gespeichert sind, von einem der Eingabesätze einschließt, die in der genannten ersten Datenspeichereinrichtung gespeichert sind.

4. Die Vorrichtung gemäß Anspruch 1, des weiteren umfassend:
eine Druckwortspeichereinrichtung (18) zum Speichern einer Mehrzahl von Arten von Druckworttabellen, wobei jede Tabelle eine dritte Gruppe von Worttabellen einschließt, jede Tabelle eine dritte Gruppe von Wortetiketten und Ausgangsformat einschließt; und
eine Druckverarbeitungseinrichtung (23) zum Auslesen einer Mehrzahl von Wortdaten, die der dritten Gruppe von Wortetiketten zugeordnet sind, die in einer der Druckworttabellen eingeschlossen sind, die in der genannten Druckwortspeichereinrichtung gespeichert sind, für jede Eingabesatz, die in der genannten ersten Datenspeichereinrichtung gespeichert ist, um die ausgelesenen entsprechenden Wortdaten gemäß dem in der Wortdrucktabelle eingestellten Ausgangsformat zu drucken, und um das Auslesen und die Druckoperationen für jede Druckworttabelle auszuführen, die in der genannten Druckwortspeichereinrichtung gespeichert ist.

5. Ein Verfahren zur Datenverarbeitung in einem Computer, der eine Eingabeverarbeitungseinrichtung, eine erste Datenspeichereinrichtung, eine zweite Datenspeichereinrichtung und eine Dateiaktualisierungseinrichtung umfaßt, wobei das Verfahren die Schritte umfaßt:
Bezeichnen einer Eingabeworttabelle, die eine erste Gruppe von Wortetiketten einschließt, einer Dateiworttabelle, die einen Dateinamen und eine zweite Gruppe von Wortetiketten einschließt, und einer Druckworttabelle, die eine dritte Gruppe von Worttabellen und Druckausgangsformat einschließt;
Eingeben einer Mehrzahl von Wortdaten, die der ersten Gruppe von Wortetiketten zugeordnet sind, in Reaktion auf einen Eingabestartbefehl und Erzeugen von Eingabesätzen, wobei jeder Eingabesatz die Mehrzahl von Eingabewortdaten einschließt;
Speichern des erzeugten Eingabesatzes in einer ersten Datenspeichereinrichtung;
Bezeichnen des Eingabesatzes in Reaktion auf einen Dateiverarbeitungsstartbefehl, der in der genannten ersten Datenspeichereinrichtung gespeichert ist, Auslesen einer Mehrzahl von Wortdaten, die der zweiten Gruppe von Wortetiketten zugeordnet sind, aus dem bezeichneten Eingabesatz, Erzeugen einer Aktualisierungssatz, die die Mehrzahl von ausgelesenen Wortdaten und den Dateinamen einschließt, der in der Dateiworttabelle eingeschlossen ist, und Ausführen des Auslesens und der Erzeugungsoperationen für jeden Eingabesatz, der in der genannten ersten Datenspeichereinrichtung gespeichert ist;
Speichern der erzeugten, entsprechenden Aktualisierungssätze in einer zweiten Datenspeichereinrichtung;
Auslesen des in der zweiten Datenspeichereinrichtung gespeicherten Aktualisierungssatzes in Reaktion auf einen Dateiaktualisierungsstartbefehl, Aktualisieren einer Datei, die dem Dateinamen entspricht, der in dem Aktualisierungssatz eingeschlossen ist, gemäß den entsprechenden Wortdaten, die in dem Aktualisierungssatz eingeschlossen sind und Ausführen des Auslesens und der Aktualisierungsoperationen für jeden Aktualisierungssatz, der in der genannten zweiten Speichereinrichtung gespeichert ist; und
Auslesen einer Mehrzahl von Wortdaten, die der entsprechenden dritten Gruppe von Wortetiketten zugeordnet sind, in Reaktion auf einen Druckausgangsbefehl für jeden Eingangssatz, der in der genannten ersten Datenspeichereinrichtung gespeichert ist, und Drucken der ausgelesenen, entsprechenden Wortdaten gemäß dem Druckausgangsformat, das in der Druckworttabelle enthalten ist.

## Revendications

1. Appareil de traitement de données comprenant une pluralité de fichiers, des moyens de traitement d'entrée destinés à générer des enregistrements d'entrée, des premiers moyens de stockage de données destinés à stocker les enregistrements d'entrée générés par les moyens de traitement d'entrée, des moyens de génération destinés à générer un enregistrement de mise à jour, des seconds moyens de stockage de données destinés à stocker les enregistrements mis à jour générés et des moyens de mise à jour de fichier destinés à extraire, en réponse à une instruction de mise à jour de fichier, un des enregistrements de mise à jour stocké dans les seconds moyens de stockage de données, à mettre à jour et à effectuer les opérations d'extraction et de mise à jour pour chaque enregistrement de mise à jour dans lesdits seconds moyens de stockage de données, ledit appareil de traitement de données comprenant :
des moyens de stockage de mots d'entrée (14) destinés à stocker une table de mots d'entrée comprenant un premier nom de fichier correspondant à l'un des fichiers et un premier ensemble d'étiquettes de mots ;
des moyens de stockage de mots de fichier (16) destinés à stocker une table de mots de fichier comprenant un second nom de fichier correspondant à l'un des fichiers et un second ensemble d'étiquettes de mots ;
lesdits moyens de traitement d'entrée (20) comprenant des moyens pour désigner le fichier correspondant au premier nom de fichier compris dans la table de mots d'entrée, pour extraire un enregistrement stocké dans le fichier désigné, pour extraire une pluralité de données de mots attribuées au premier ensemble d'étiquettes à partir de données de mots prédéterminées comprises dans l'enregistrement extrait, pour générer des enregistrements d'entrée, chaque enregistrement d'entrée comprenant la pluralité de données de mots attribuées au premier ensemble d'étiquettes, et pour exécuter les opérations d'extraction et de génération de chaque enregistrement stocké dans le fichier désigné ;
lesdits moyens de génération (21) comprenant des moyens pour désigner l'un des enregistrements d'entrée stockés dans les premiers moyens de stockage de données, pour extraire de l'enregistrement d'entrée une pluralité de données de mots attribuées au second ensemble d'étiquettes de mots, pour générer un enregistrement de mise à jour comprenant les données de mots respectives extraites et le second nom de fichier fixé dans la table de mots de fichier, et pour exécuter les opérations d'extraction et de génération pour chaque enregistrement d'entrée stocké dans les premiers moyens de stockage de données ;
lesdits moyens de mise à jour de fichier (28) comprenant des moyens pour mettre à jour, conformément aux données de mots respectives comprises dans l'enregistrement de mise à jour, le fichier attribué au second nom de fichier compris dans l'enregistrement de mise à jour, et pour exécuter les opérations d'extraction et de mise à jour pour chaque enregistrement de mise à jour stocké dans les seconds moyens de stockage de données.

2. Appareil selon la revendication 1, comprenant, de plus :
des premiers moyens de préparation (12) destinés à préparer de manière arbitraire, dans lesdits moyens de stockage de mots d'entrée et par un opérateur, la table de mots de fichier comprenant le second ensemble arbitraire d'étiquettes de mots et un second nom de fichier arbitraire ; et
des seconds moyens de préparation (12) destinés à préparer de manière arbitraire, dans lesdits moyens de stockage de mots de fichier et par un opérateur, la table de mots de fichier comprenant un second ensemble arbitraire d'étiquettes de mots et un second nom de fichier arbitraire.

3. Appareil selon la revendication 1, dans lequel :
lesdits moyens de stockage de mots de fichier (16) stockent une pluralité d'ensembles de tables de mots de fichier ; et
lesdits moyens de génération (21) comprennent des moyens pour générer une pluralité d'enregistrements de mise à jour correspondant aux tables de mots de fichier respectives stockées dans lesdits moyens de stockage de mots de fichier, à partir de l'un des enregistrements d'entrée stockés dans lesdits premiers moyens de stockage de données.

4. Appareil selon la revendication 1, comprenant, de plus :
des moyens de stockage de mots d'impression (18) destinés à stocker une pluralité de types de tables de mots d'impression, chaque table comprenant un troisième ensemble de tables de mots, chaque table comprenant un troisième ensemble d'étiquettes de mots et un format de sortie ; et
des moyens de traitement d'impression (23) destinés à extraire une pluralité de données de mots attribuées au troisième ensemble d'étiquettes de mots compris dans l'une des tables de mots d'impression stockées dans lesdits moyens de stockage de mots d'impression pour chaque enregistrement d'entrée stocké dans lesdits premiers moyens de stockage de données, pour imprimer les données de mots respectives extraites conformément au format de sortie fixé dans la table de mots d'impression et pour exécuter les opérations d'extraction et d'impression pour chaque table de mots d'impression stockée dans lesdits moyens de stockage de mots d'impression.

5. Méthode pour le traitement de données dans un ordinateur comprenant des moyens de traitement d'entrée, des premiers moyens de stockage de données, des seconds moyens de stockage de données et des moyens de mise à jour de fichier,
la méthode comprenant les étapes consistant à :
désigner une table de mots d'entrée comprenant un premier ensemble d'étiquettes de mots, une table de mots de fichier comprenant un nom de fichier et un second ensemble d'étiquettes de mots et une table de mots d'impression comprenant un troisième ensemble de tables de mots et un format de sortie d'impression ;
entrer, en réponse à une instruction de début d'entrée, une pluralité de données de mots attribuées au premier ensemble d'étiquettes de mots et générer des enregistrements d'entrée, chaque enregistrement d'entrée comprenant la pluralité de données de mots d'entrée ;
stocker les enregistrements d'entrée générés dans des premiers moyens de stockage de données ;
désigner, en réponse à une instruction de début de traitement de fichier, l'enregistrement d'entrée stocké dans lesdits premiers moyens de stockage de données, extraire de l'enregistrement d'entrée désigné une pluralité de données de mots attribuées au second ensemble d'étiquettes de mots, générer un enregistrement de mise à jour comprenant la pluralité de données de mots extraites et le nom de fichier compris dans la table de mots de fichier, et exécuter les opérations d'extraction et de génération pour chaque enregistrement d'entrée stocké dans lesdits premiers moyens de stockage de données ;
stocker les enregistrements de mise à jour respectifs générés dans des seconds moyens de stockage de données ;
extraire, en réponse à une instruction de début de mise à jour de fichier, l'enregistrement de mise à jour stocké dans les seconds moyens de stockage de données, mettre à jour un fichier correspondant au nom de fichier compris dans l'enregistrement de mise à jour conformément aux données de mots respectives comprises dans l'enregistrement de mise à jour, et exécuter les opérations d'extraction et de génération pour chaque enregistrement de mise à jour stocké dans lesdits seconds moyens de stockage ; et
extraire, en réponse à une instruction de sortie d'impression, une pluralité de données de mots attribuées au troisième ensemble respectif d'étiquettes de mots pour chaque enregistrement d'entrée stocké dans lesdits premiers moyens de stockage de données et imprimer les données de mots respectives extraites conformément au format de sortie d'impression compris dans la table de mots d'impression.
